# EUROPEAN PATENT APPLICATION

(11) **EP 1 283 509 A2**
(43) Date of publication of application: **12.02.2003**
(21) Application number: 02251360.0
(22) Date of filing: 27.02.2002
(51) Int. Cl.: G08G 1/005, G08G 1/09, G01C 21/20

(54) **Information transmission system and traveling server and terminal device for use thereof, and information transmitting method**

(30) Priority: 07.08.2001 JP 2001238687
(71) Applicant: Hitachi, Ltd., Chiyoda-ku, Tokyo 101-8010 (JP)
(72) Inventor: Asada, Kouji, c/o Hitachi Ltd.,, Chiyoda-ku, Tokyo 100-8220 (JP); Sugiyama, Yoshikazu, c/o Hitachi Ltd.,, Chiyoda-ku, Tokyo 100-8220 (JP); Sano, Kenji, c/o Hitachi Ltd.,, Chiyoda-ku, Tokyo 100-8220 (JP); Tomobe, Osamu, c/o Hitachi Ltd.,, Chiyoda-ku, Tokyo 100-8220 (JP)
(74) Representative: Calderbank, Thomas Roger

(57) **Abstract**

An information transmission system, for transmitting data relating to a plan and destination of traveling prepared in advance, depending upon the destination and time on the travel, by using a portable terminal having transmission function of data, comprising a portable terminal, and a travel server memorizing personal data and various kinds of data therein, wherein the travel server produces travel information necessary for the travel to each person, upon the basis of the personal data including destination information of travel, and the various kinds of data, and transmit it from the travel server to the portable terminal, depending upon location information of the portable terminal and time information programmed in advance, thereby enabling the traveler to obtain the necessary information at the destination on traveling, so as to carry out activities, smoothly, on the day.

## Description

The present invention relates to an information transmission system enabling transmission of information to a terminal device(s), for providing convenience to a traveler, as well as, an apparatus for use thereof and a method, and so on.

In recent years, small-sizing and low-electric power consumption was made or achieved, remarkably, on terminal devices including, such as, a portable telephone and a Personal Digital Assistance (PDA), as representative examples thereof, and in this year, a next generation portable service will be started. In the next generation portable service, channel capacity of the terminal device comes to be large, and then newly available contents, including, such as, a image or picture, etc., can be distributed thereon, in addition to voice communication and reading of mails and webs, which are available according to the conventional art.

As a method for using such the small-sized and/or low-power consuming portable terminals, there can be listed up a one of obtaining various data, directly, through the portable terminal from an outside, for example, on the way of traveling, etc. For instance, one example of using for an assistance of traveling is described, for example, in Japanese Patent Laying-Open No. Hei 11-143358 (1999), wherein a travel assistance server is provided through a network, so that information can be used mutually between a traveling data compiling apparatus and a navigation apparatus, and it is described that information of traveling plan or schedule made up in advance can be obtained from a place on travel through the navigation apparatus.

As was shown in the travel assistance mentioned above, conventionally, it is only possible to take out data relating to travels, by sending a demand thereupon from the navigation apparatus and/or the portable terminal, i.e., through reading the webs relating to travels, etc. However, it is impossible to obtain the data about the plan or schedule prepared in advance, and/or data relating to the destination of travel, being transmitted depending upon the advance on the destinations of travel and times.

The present invention seeks to address the drawbacks mentioned above, to provide an information transmitting system for assistance of travel, in which necessary information can be obtained easily at a place on traveling through the portable terminal, thereby assisting a traveler to carry out actions smoothly in the day on the plan, and an apparatus for use thereof.

According to the present invention, there is provided an information transmission system, comprising: a portable terminal having transmission function of data; and a travel server for memorizing personal data and various kinds of data therein, wherein: said travel server produces travel data necessary for traveling of an each person, from the personal data, including destination information of travel therein, and the various kinds of data, which are memorized in said travel server, and transmits the travel data from said travel server to said portable terminal, depending upon at least one or both of location information of said portable terminal and time information programmed in advance.

Also, according to the present invention, the information transmission system as described in the above, wherein said travel data is changed to newest data when changing is made on said various kinds of data, and/or, as the personal data registered in said travel serve are included destination of travel, means for moving, and identification means of said portable terminal, while in the similar manner, as the various kinds of data registered in said travel serve are included information of facilities and sightseeing information corresponding to the destination of travel, and said travel server produces the travel data for the each person and for each destination from the personal data, so as to transmit them to said portable terminal.

Also, according to the present invention, the information transmission system as described in the above, further comprising area servers located in plural numbers of areas, wherein the various kinds of data, including the information of facilities and the sightseeing information, which are accumulated in said local area servers, are taken out from said local area servers, so as to be used for producing of the travel data, and/or wherein said travel server accesses to the local area server nearest to a present location of said portable terminal when transmitting the data on said portable terminal.

Also, according to the present invention, the information transmission system as described in the above, wherein information of facilities and sightseeing information corresponding to the destination of travel are registered in said travel serve, respectively, as the various kinds of data, and said various kinds of data is supplied to a broadcasting station for broadcasting a travel program, so as to be shared with, such as, the travel broadcast of televising broadcasting, in information, thereby achieving an improvement on advertising effect, as well as, on usability of the portable terminal.

Also, according to the present invention, there is provided an information transmission system, comprising: a portable terminal having transmission function of data; and a travel server for memorizing personal data and various kinds of data therein, wherein: said travel server produces travel data necessary for traveling, from the personal data, including a destination information of travel therein, and various kinds of data, being memorized in said travel server; and said portable terminal memorizes a telephone number of said travel server, wherein said portable terminal transmits the telephone number of itself to said travel server, together with location identification information for use in discriminating of a location registration area when conducting location registration, while said travel server conducts search upon the personal data memorized therein by referring to the telephone number received, so as to compare the destination data of travel contained in the personal data, being coincident with, and the location identification information received, thereby to transmit it to said travel server when they are coincident with each other.

Also, according to the present invention, there is provided an information transmission system, comprising: a portable terminal having transmission function of data; and a travel server for memorizing personal data and various kinds of data therein, wherein: said travel server transmits a telephone number of itself, periodically, by using the telephone number of said portable terminal memorized in advance in said travel server, so as to require location information of said portable terminal, while said portable terminal transmits the location information thereof to said travel server when the telephone number transmitted from said travel server is in coincidence with the telephone number memorized in advance therein, and thereby said travel server transmits the travel data to said portable terminal, corresponding to the location information transmitted.

Also, according to the present invention, there is provided an information transmission system, comprising: a portable terminal having transmission function of data; and a travel server for memorizing personal data and various kinds of data therein, wherein: said portable terminal comprises a location detector portion for receiving radio wave from a positioning system, thereby transmitting the location information calculated out by said local ion detector portion thereof, together with a telephone number of said portable terminal itself, to said travel server, while said travel server conducts search upon the personal data memorized therein by referring to the telephone number received, so as to compare the destination data of travel contained in the personal data being coincident with, to the location identification information received, thereby to transmit the travel data to said portable terminal when they are coincident with each other.

Also, according to the present invention, there is provided an information transmitting method, for transmitting travel information necessary for traveling, from a travel server memorizing personal data and various kinds of data therein, to a portable terminal having a function of transmission of data, comprising the following steps: a step for producing the travel data necessary for travel from the personal data, including destination data of travel, and the various kinds of data, which are memorized in said travel server, in said travel server; a step for transmitting a telephone number of said portable terminal itself together with a location information calculated out in a location detector portion for receiving radio wave from a positioning system, which is owned by said portable terminal, from said portable terminal; and a step for conducting search upon the personal data memorized in said travel server, by referring to the telephone number received, so as to compare the destination data of travel contained in the personal data being coincident with, to the location identification information received, thereby transmitting the travel data to said portable terminal when they are coincident with each other.

Also, according to the present invention, there is provided a portable terminal for use in an information transmission system, having a portable terminal having transmission function of data; and a travel server for memorizing personal data and various kinds of data therein, thereby producing travel data necessary for traveling, from the personal data, including destination information of travel therein, and the various kinds of data, so as to transmit the travel data to said portable terminal depending upon location information of said portable terminal, wherein said portable terminal comprises: means for memorizing a telephone number of said travel server; and means for transmitting location identification information to be used in discriminating of a location registration area when said portable terminal conducts a location registration, together with a telephone number of said portable terminal itself, to said travel server.

Also, according to the present invention, there is provided a portable terminal for use in an information transmission system, having a portable terminal having transmission function of data; and a travel server for memorizing personal data and various kinds of data therein, thereby producing travel data necessary for traveling, from the personal data, including destination information of travel therein, and the various kinds of data, so as to transmit the travel data to said portable terminal depending upon location information of said portable terminal, wherein said portable terminal comprises: a location detector portion for receiving radio wave from a positioning system; and means for transmitting location information calculated out by said location detector portion, together with a telephone number of said portable terminal itself, to said travel server.

Also, according to the present invention, there is provided a server for use in an information transmission system, having a portable terminal having transmission function of data; and a travel server for memorizing personal data including destination information of travel, and various kinds of data therein, comprising: means for producing travel data necessary for traveling from the personal data and the various kinds of data memorized in said travel server; means for transmitting a telephone number of itself, periodically, with using a telephone number of said portable terminal memorized in said travel server in advance; means for requiring location information of said portable terminal; and means for transmitting the travel data to said portable terminal, depending upon the location information transmitted from said portable terminal.

Also, according to the present invention, there is provided a server for use in an information transmission system, having a portable terminal having transmission function of data; and a travel server for memorizing personal data including destination information of travel, and various kinds of data therein, comprising: means for producing travel data necessary for traveling from the personal data and the various kinds of data memorized in said travel server; means for receiving location information transmitted from said portable terminal having a location detector portion for receiving radio wave from a positioning system, together with a telephone number of said portable terminal; and means for conducting search upon the personal data memorized therein, by referring to the telephone number received, so as to compare the destination data of travel contained in the personal data being coincident with, to the location identification information received, thereby transmitting the travel data to said portable terminal when they are coincident with each other.

And, also, according to the present invention, there is provided an information transmission system, comprising: a portable terminal having transmission function of data; a in-house server for transmitting data through a network; and a travel server for memorizing personal data including destination information of travel, and various kinds of data therein; wherein, information of either one of picture and audio, being recorded during travel, is transmitted from said portable terminal to said travel server, together with either one or both of location information and time information recorded, and said travel server compiles the information transmitted from said portable terminal, thereby to transmit it to said in-house server as an album after the travel.

Also, according to the present invention, the information transmission system as was mentioned above, wherein said information of either one of picture and audio recorded during the travel includes information obtained by taking through said portable terminal during the travel and a portion of travel information transmitted from said travel server, and/or said portable terminal comprises: a holding mechanism for holding an IC card therein; and an input/output means for reading and/or writing from and/or into said IC card, wherein the information of either one of picture and audio, being recorded into said IC card during the travel, is transmitted from said portable terminal to said travel server, together with either one or both of location information and time information recorded.

And, also, according to the present invention, there is provided an information transmission system, comprising: a portable terminal having function of taking picture, as well as, of transmission of data; a in-house server for transmitting data through a network; and a travel server for memorizing personal data including destination information of travel, and various kinds of data therein; wherein, information of either one of picture and audio, being taken during travel, is transmitted from said portable terminal to said travel server, together with either one or both of location information and time information recorded, and said travel server compiles the information transmitted from said portable terminal, thereby to transmit it to said in-house server as an album after the travel.

Those and other features, objects and advantages of the present invention will become more apparent from the following description when taken in conjunction with the accompanying drawings wherein:
Fig. 1 is a view for explaining a system, in which a travel plan is made up on a travel program, as an information source thereof, and a traveler receives necessary information at a place on traveling when she/he travels, according to one embodiment of the invention;
Fig. 2 is a view for showing an image of various data transmitted to a portable terminal from a travel server, according the one embodiment of the invention;
Fig. 3 is a view for showing an image of detailed information of the destination of travel transmitted to the portable terminal from the travel server, according the one embodiment of the invention;
Fig. 4 is a view for explaining about an electronic album provided from the travel server after the traveling, according the one embodiment of the invention;
Fig. 5 is a view for explaining about the structure of a main body of the travel server, according the one embodiment of the invention;
Fig. 6 is a view for showing an example of a format of data transmitted from a home server to the travel server, according the one embodiment of the invention;
Fig. 7 is a view for showing the structure of a portable terminal, according the one embodiment of the invention;
Fig. 8 is also a view for showing the structure, but of other portable terminal, according the one embodiment of the invention; and
Fig. 9 is also a view for showing the structure, of further other portable terminal, according the one embodiment of the invention.

Hereinafter, embodiments of an information transmitting system, a travel server for use thereof, a portable terminal and an information transmitting method, according to the present invention, will be fully explained by referring to the attached drawings.

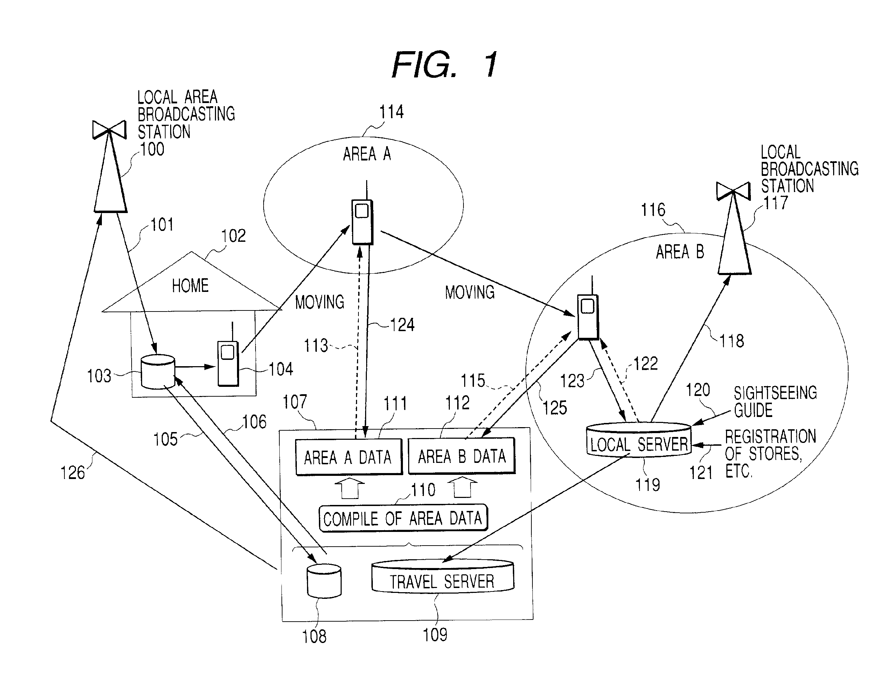

Fig. 1 is a view for explaining about a system, in which a traveling plan is made up on a travel program, as an information source thereof, and a traveler receives necessary information at a place on traveling when she/he travels, according to one embodiment of the invention.

In Fig. 1, a reference numeral 100 indicates a local area broadcaster of a portable terminal user, which broadcasts travel programs; 101 a travel program distributed from the local area broadcaster; 102 a residence where a user makes a life, normally; 103 an in-house sever for viewing and listening or for recording the travel program at home of the user; 104 a portable terminal to be brought or carried with to a place of traveling; 105 various kinds of data which are transmitted from the in-house server to the travel server located within a residence area of the user; 106 various kinds of data which are transmitted from the travel server to the in-house server; 107 the travel server for compiling and processing various kinds of travel data, so as to transmit them to the portable terminal; 108 a personal server to be used mainly for compiling personal data of the user; 109 a common server for compiling public information, such as, streams for use in broadcasting or others; 110 a travel data generation apparatus for producing or generating information, so as to send it to each of areas of the destination of travel, from each data within the server; 111 transmission data for use in a travel destination A, which are generated by 110; 112 transmission data for use in a travel destination B, which are generated by 110; 113 travel data to be sent when the terminal enters into the area A; 114 an area A being one of the travel destination of the user; 115 travel data to be sent when the terminal enters into the area B; 116 an area B being one of the travel destination of the user; 117 a local area broadcaster located in the travel destination B; 118 broadcast contents to be sent from an area server of the area B to the broadcaster; 119 the area server for compiling and processing various kinds of data relating to the area B; 120 sightseeing guides of the area B registered in the area server; 121 store or shop information of the area B registered in the area server, in the same manner as the sightseeing guides; 122 various data to be transmitted from the area B server to the portable information terminal; 123 various data to be transmitted from the portable information terminal to the area B server; 124 location information for informing the travel server that the portable terminal locates in the area A; 125 location information for informing the travel server that the portable terminal locates in the area B; and a steam of the travel programs, being produced or generated by the travel server, to be broadcasted by the broadcaster, respectively.

The user owing the portable terminal 104 views and listens to the travel programs of the local area broadcaster 100 at home, and she/he selects an area where she/he wishes to make traveling. Regarding the area A 114 and the area B 116 which is selected herein, the user conducts a search by means of the travel server 107, and confirms various information of, such as, hotels, events, etc. The user makes up a schedule or plans upon basis thereof, and sends it to the server for the personal use located in the travel server 107, together with other personal information, such as, a number of crews or members, etc. The travel server 107 extracts necessary information for the travel from the personal data and the public data, which are collected and stored in the server 109, and compiles or edits them, to generate area data for each of the destinations of travel. Also, at the same time, the travel server generates the stream for use of the travel programs sponsored by, for example, shops or stores, etc., located in the area of the travel destination, and broadcasts towards each home from the local area broadcaster 100.

The portable terminal 104 always checks the location information, and when it determines that the user reaches or arrive to the area of destination A, it inform the fact to the travel server 107. The travel server receives that information, and then it transmits the information of the area A to the portable terminal 104, but depending upon the time. Also, when the user reaches or arrives to other area B, in the same manner, the information of the area B is automatically transmitted from the travel server 107 to the portable terminal 104.

The local data, such as, the shop or store information, the sightseeing guides, etc., of the area B, are accumulated or compiled up in the area server 119 located in the area B, and those information can be viewed and/or listened to from the portable terminal 104. In that instance, a special service can be available, for example, by adding a coupon card, etc., to the shop or store information.

The moving pictures and/or still pictures and/or voices, etc., which are taken in the area B by the user is transmitted from the portable terminal 104 to the area server B, wherein they are compiled and/or processed in the form of data for personal use. They are sent to the home server 103, as a digital album, after the traveling. The user views and listens to the album on the in-home server after the traveling, and she/he can compile it in memory of the travel, by adding text documents and/or pictures if necessary.

Herein, explanation will be given on the details of the operation, in the embodiment mentioned above, i.e., the transmission of the location information from the portable terminal to the travel server, below.

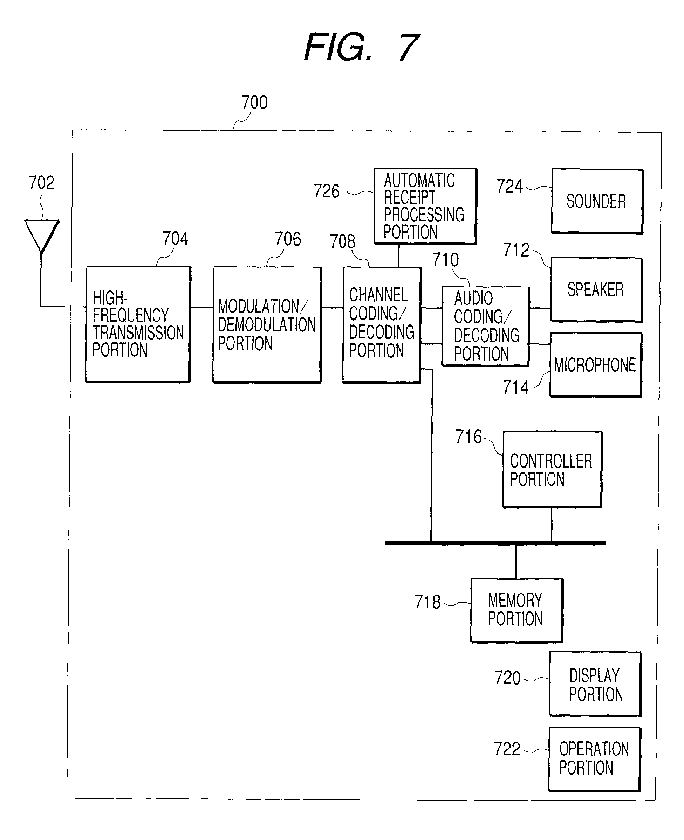

Fig. 7 is a view for showing the portable terminal, according to the embodiment of the present invention. In this Fig. 7, a reference numeral 704 indicates a high-frequency signal transmission portion; 706 a modulation/demodulation portion; 708 a channel coding/decoding portion for processing signals from the modulation/demodulation portion; 710 an audio coding/decoding portion for coding and/or decoding an audio; 722 an operation portion; 718 a memory portion for memorizing preset values inputted from the operation portion; 726 an automatic receipt processing portion for conducting an automatic input processing of signals received; 720 a display portion for displaying pictures and characters, etc., thereon; 724 a sounder for alarming a calling sound thererom; 712 a speaker for outputting the audio; and 714 a microphone for inputting an audio.

A base station of the portable terminal 700 always sends information including a base station ID for decimating the base station through a broadcasting channel.

The portable terminal 700, receiving the information through the broadcasting channel, is able to notice the movement from a registration area at the present to the registration of other location area, and if the user moves, the location registration will be conducted in a new area.

After completion of the location registration, the portable terminal 700 automatically makes a call to a telephone number of the travel server 107, which is memorized into the memory portion 118 in advance.

After completing the connection in communication with the travel server 107, it transmits the location registration area number registered on the location (or, a base station ID registered in the location) together with the telephone number of itself.

The travel server 107 conducts a search on the personal information memorized in the memory for use of memorizing the personal data therein, with using the telephone number received by it, thereby obtaining the travel data of the individual being coincide with.

Since the destinations are memorized in relation with the location registration area number, it is possible to know that the user reaches or arrives to the destination A or not, by deciding whether the location registration area number received is coincide with the location registration area number of the destination or not.

If deciding that the location registration area number received is coincide with that of the destination A, the information of the area A is transmitted to the portable terminal 104.

Further, explanation will be given other method for the portable terminal to transmit the location information to the travel server.

The travel server 107 sends to the user on traveling, periodically, for example, at 10:00, 12:00, 15:00 and 17:00 in every day.

The portable terminal 700 automatically receives by using the automatic receiving portion 726, and it requires the telephone number thereof to the sender, thereby sending the present location registration area number if the telephone number received is in coincident with the that of the travel server memorized in the memory portion 118 in advance.

Since operating is in this manner, the travel server is able to know the location information of the portable terminal.

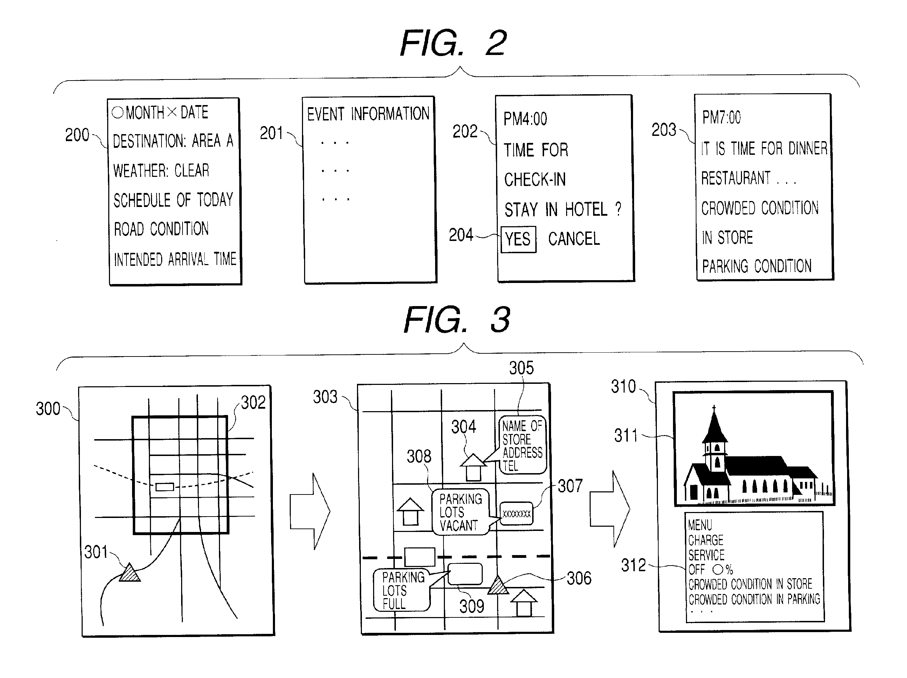

Fig. 2 is a view for explaining an image of various kinds of data which are transmitted from the travel server to the portable terminal.

In this Fig. 2, a reference numeral 200 indicates an example of the data which reaches on the day of departure; 201 a local sightseeing information of the destination; 202 an example of data which reaches to when coming near to check-in time of the accommodation; and 203 an example of data reaching to when coming near to a dinner time, respectively.

The user of the portable terminal who makes up the planning sends the schedule and the plan of her/his activities to the travel server, in advance. Then, the travel server sends the information corresponding to them to the portable terminal. On the day of traveling, as is shown by 200, it sends the destination, weather, road condition, scheduled arrival time, etc., on that day, thereby prompting the confirmation by the user. It is also possible to widen or enlarge the choices of the user's activities, by sending event information, such as shown by 201, corresponding to the destination. When the user approaches or comes near to the destination, as shown by 202, it is possible to pay an attention to the user, by sending her/him the information of the accommodation, which was already reserved. Also, in a case where the reservation is not made for accommodation, it is possible to make the reservation available from the portable terminal, by sending the information of vacancy of rooms therein. In dinnertime, in the similar manner, it is also possible to save troubles for the user to find a restaurant or the like by her/himself, by sending the restaurant information thereto.

Fig. 3 is a view for explaining an image of detailed information about the destination of travel, which is sent from the travel server to the portable terminal, in the embodiment according to the present invention.

In this Fig. 3, a reference numeral 300 is a map data sent to the portable terminal when it comes near to the destination; 301 a marker of the present location; 302 a detailed map for showing a city area of the destination; 303 data of 302, being displayed enlargedly; 304 the restaurant selected within the data 303; 305 a plain data relating to the restaurant; 306 a marker indicating the present location of the portable terminal; 307 the location of parking area thereof; 308 a crowding condition of the parking; 309 other parking area; 310 a display for showing the detailed data of the selected restaurant 304; 311 a picture on an outlook of the selected restaurant 304; and 312 the detailed data of the restaurant, respectively.

When the user bringing the portable terminal together comes close to the destination, the portable terminal detects the present location by itself, and transmits the information thereof to the travel server. Then, the travel server sends the map 300 in the vicinity of the present location thereof to the portable terminal. In 300 is displayed the city area of the destination, in the form of detailed map 302 thereof. If the user selects 302, or when she/he enters into the area of 302, then the data 303 is send from the travel server, as the detailed map of 302. On the detailed map 303, information relating to the main restaurants, the parking spots, etc., is displayed. When the user selects the restaurant 304 on the map 303, the plain data thereof is displayed as is shown by 305. Also, the parking area information 307 and 309 are displayed together with the crowding condition thereof, as is shown by 308. With the above, it is easy for the user moving on a car to move within the city area. When the restaurant 304 is selected on the detailed map 303, the information 310 is transmitted from the travel server, again, if she/he wishes to see the detailed information of the restaurant. Herein, real-time information 312, such as, the outlook 311, menus, and crowding condition of the restaurant, and also a vacant condition of the parking lot, etc., is displayed at the same time.

Herein, a method of detecting an approach of the user near to the destination will be explained, in the embodiment mentioned above.

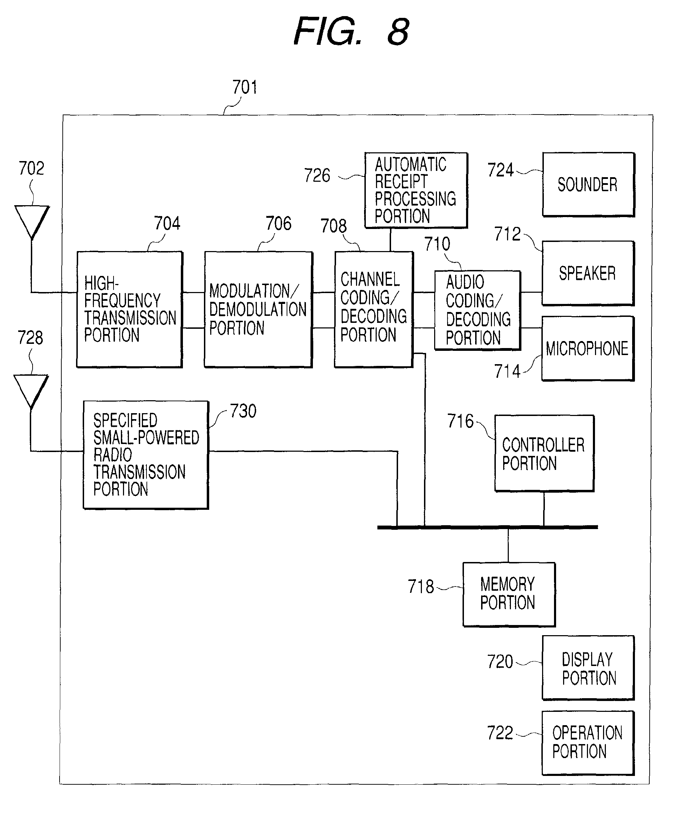

Fig. 8 shows the portable terminal 701. The difference from that shown in the Fig. 7, lies in that a specified small-powered transmission portion 130 and a specified small-powered antenna 728 are added therein.

Such as, a station or a hotel, on which the user usually makes the destination, is always sending broadcast information, through a specified small-powered wireless method. This broadcast information includes a location, i.e., the information, including the latitude and the longitude thereof.

The portable terminal 701, periodically, initiates or starts the operation of the specified small-powered transmission portion 130, and thereby tuning to the channel of the broadcast information.

Herein, when the user comes near to the destination, the portable terminal can receive the broadcast information.

The portable terminal 701 send the latitude and the longitude included in the broadcast information, to the telephone number of itself and to the travel server.

With such the operation, the portable terminal is able to inform the travel server of the fact that the user comes near to the destination.

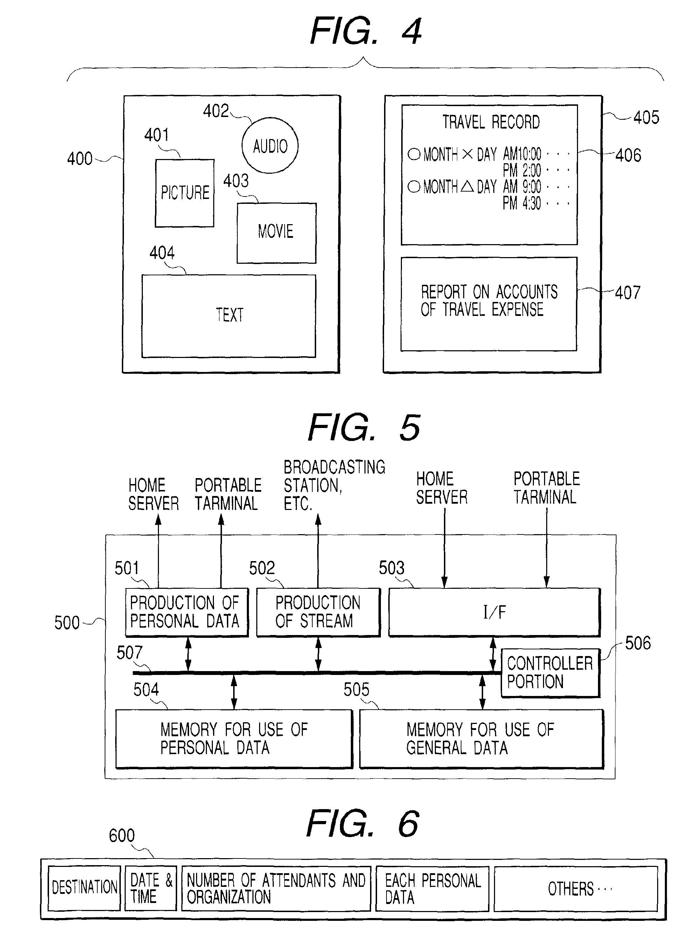

Fig. 4 is a view for explaining about an electronic album, which is provided from the travel server after the traveling, in the embodiment of the present invention.

In this Fig. 4, a reference numeral 400 indicates an album screen; 401 still picture data; 402 audio data; 403 moving picture data; 404 text data; 405 other page(s) of the electronic album; 406 a traveling record; and 407 breakdown of expenditure for the traveling, respectively.

The user of the portable terminal sends the still picture data 401, the moving picture data 403 and/or the audio data 402, through the local server located in the area being nearest thereto. The local server, watching the channel condition, transmits the data sent from the user in the time when the channel is vacant or available, while the travel server generates or produced the electronic album of the traveling upon the basis of the personal data of the user, etc., together with the transmitted data. The electronic album produced is then transmitted to the in-house server of the user, therefore the user can see and read the album after the traveling, in memory thereof. Also, the user can add apicture(s) and/or text thereto, depending upon necessity thereof.

Herein, explanation will be given on an example of the portable terminal, which is used in the embodiment mentioned above.

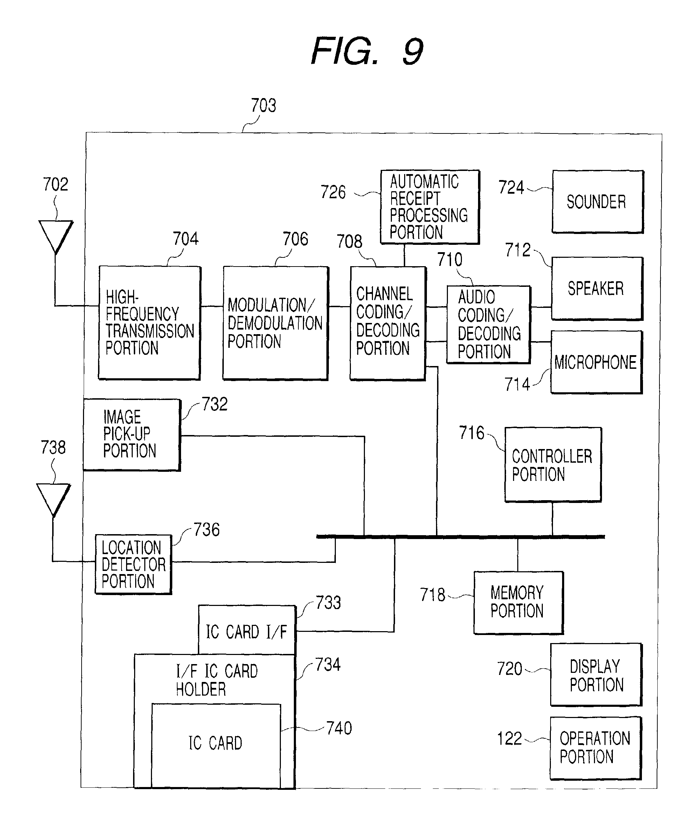

Fig. 9 is a view for showing the portable terminal.

The difference from that shown in the Fig. 7 lies in that, thus: a reference numeral 732 a video or picture pick-up portion, such as, a CCD camera or the like; 733 an IC card interface; 734 an IC card holder; 740 an IC card being detachable or removable; 736 a location detector portion, such as, a GPS receiver potion using the positioning satellite, or the like; and 738 an antenna for use in location detection.

In this Fig. 9, the user takes pictures through the video pick-up portion 732 by operating upon an operation portion 722, when she/he wishes to take the still picture for the album or the moving picture.

The still picture data 401, the moving picture data 403, and/or the audio data 402 (being collected by means of the microphone 714) that are taken, are memorized into the memory portion 718, and are transmitted to the local server.

With such the operation in this manner, it is possible to produce the electronic album on the travel server.

Recording of the data taken can be conducted by inserting the IC card into the IC card holder 734, while the still picture data 401, the moving picture data 403, or the audio data 402 that are taken can be read out when the user comes back to her/his home, by inserting the IC card into an equipment being readable thereon, such as, a personal computer, etc.

And, production of the electronic album can be possible by using the personal computer.

Further, explanation will be given on other embodiment of the portable terminal.

In the embodiment mentioned above, the location information includes the location registration ID number and/or the ID number of the radio base station, however it is also possible to use the location detector portion 736.

As was mentioned in the above, when being required upon the location information, the portable terminal 703 initiates the location detector portion, so as to receive the GPS signal and calculate out the latitude and the longitude upon basis of the received data.

The latitude and the longitude obtained through the calculation is transmitted through the channel coding/decoding portion 708, the modulation/demodulation portion 706 and the high-frequency signal transmission portion704, to the travel server.

Doing in this manner, the travel server can notices the location of the user.

Fig. 5 is a view for showing the structure of a main body of the travel server, according to an embodiment of the present invention. In this Fig. 5, a reference numeral 500 indicates the main body of the travel server; 501 a processing apparatus for producing or generating the personal data; 502 a processing apparatus for producing or generating the stream for use in the broadcasting; 503 an interface circuit for inputting data from an outside; 504 a memory apparatus for the personal data; 505 a memory apparatus for general data; and 506 a controller apparatus for controlling those mentioned above, respectively.

The personal data, which are transmitted by the user from the in-house server, such as, the number of the crews or members attending to the travel, the ID information of the portable terminal(s) owned by the attendants, for example, is/are accumulated in the memory apparatus 504 through the interface 503, so as to be referenced at any time. Also the general data, such as, the sightseeing/events information and that of accommodation, etc., are accumulated in the memory apparatus 505. The data transmitted to the portable terminal of the user are generated in the processing apparatus 501 upon the basis of the data in the memory apparatuses 503 and 505. Also the broadcasting stream is produced in the processing apparatus 502 upon the basis of the data in the memory apparatus 505. The processing apparatus 506 is provided for the purpose of controlling the write-in and read-out of each data into/from the server.

Fig. 6 is a view for explaining an example of the format of data to be transmitted from the home-use server to the travel server, according to the embodiment of the present invention. In this Fig. 6, a reference numeral 600 indicates an example of the data, which is transmitted from the home-use server.

Upon traveling of the user, the home-use server sends the personal information, being necessary for making up the plan and the data to be transmitted to the portable terminal. Herein, as an example thereof, all the information is sent, such as, the destinations of travel, days and times, the number and an organization of attendants, the personal data of each of the attendants, the ID information of the portable terminal(s) owned by the attendant, and others, which can be considered to be necessary. The travel server produces or generates the traveling plan or schedule upon the basis of such the data, and sends the information considered necessary, to the portable terminal owned by the user, depending upon the time and the places.

According to the present invention, there can be provided an information transmission system, for use in an assistance on traveling, and an apparatus for use thereof, wherein the user can call for transmission of a schedule or plan prepared in advance, and the data relating to the destination of the travel, etc., at any time, depending upon the present location of the portable terminal and the present time, thereby obtaining the necessary information at the destination on traveling on the portable terminal, so as to carry out activities on that day on traveling smoothly.

While we have shown and described several embodiments in accordance with our invention, it should be understood that the disclosed embodiments are susceptible of changes and modifications without departing from the scope of the invention. Therefore, we do not intend to be bound by the details shown and described herein but intend to cover all such changes and modifications falling within the ambit of the appended claims, as interpreted by the description and drawings.

## Claims

1. An information transmission system, comprising:
a portable terminal having transmission function of data; and
a travel server for memorizing personal data and various kinds of data therein, wherein:
said travel server produces travel data necessary for traveling of an each person, from the personal data, including destination information of travel therein, and the various kinds of data, which are memorized in said travel server, and transmits the travel data from said travel server to said portable terminal, depending upon at least one or both of location information of said portable terminal and time information programmed in advance.

2. An information transmission system, as described in the claim 1, wherein said travel data is changed to newest data when changing is made on said various kinds of data.

3. An information transmission system, as described in the claim 1, wherein destination of travel, means for moving, identification means of said portable terminal are registered in said travel serve, as the personal data, and said travel server produces the travel data for the each person and for each the destination from the personal data and the various kinds of data, so as to transmit them to said portable terminal.

4. An information transmission system, as described in the claim 1, wherein destination of travel, means for moving, identification means of said portable terminal are registered in said travel serve, as the personal data, and also information of facilities and sightseeing information corresponding to the destination of travel are registered in said travel serve, as the various kinds of data.

5. An information transmission system, as described in the claim 1, further comprising area servers located in plural numbers of areas, wherein the various kinds of data, including the information of facilities and the sightseeing information, which are accumulated in said local area servers, are taken out from said local area servers, so as to be used for producing of the travel data.

6. An information transmission system, as described in the claim 1, wherein said information transmission system further comprises area servers located in plural numbers of areas, and said travel server accesses to the local area server nearest to a present location of said portable terminal when transmitting the data on said portable terminal.

7. An information transmission system, as described in the claim 1, wherein information of facilities and sightseeing information corresponding to the destination of travel are registered in said travel serve, respectively, as the various kinds of data, and said various kinds of data is supplied to a broadcasting station for broadcasting a travel program.

8. An information transmission system, comprising:
a portable terminal having transmission function of data; and
a travel server for memorizing personal data and various kinds of data therein, wherein:
said travel server produces travel data necessary for traveling, from the personal data, including a destination information of travel therein, and various kinds of data, being memorized in said travel server; and
said portable terminal memorizes a telephone number of said travel server, wherein said portable terminal transmits the telephone number of itself to said travel server, together with location identification information for use in discriminating of a location registration area when conducting location registration, while said travel server conducts search upon the personal data memorized therein by referring to the telephone number received, so as to compare the destination data of travel contained in the personal data, being coincident with, and the location identification information received, thereby to transmit it to said travel server when they are coincident with each other.

9. An information transmission system, comprising:
a portable terminal having transmission function of data; and
a travel server for memorizing personal data and various kinds of data therein, wherein:
said travel server transmits a telephone number of itself, periodically, by using the telephone number of said portable terminal memorized in advance in said travel server, so as to require location information of said portable terminal, while said portable terminal transmits the location information thereof to said travel server when the telephone number transmitted from said travel server is in coincidence with the telephone number memorized in advance therein, and thereby said travel server transmits the travel data to said portable terminal, corresponding to the location information transmitted.

10. An information transmission system, comprising:
a portable terminal having transmission function of data; and
a travel server for memorizing personal data and various kinds of data therein, wherein:
said portable terminal comprises a location detector portion for receiving radio wave from a positioning system, thereby transmitting the location information calculated out by said location detector portion thereof, together with a telephone number of said portable terminal itself, to said travel server, while said travel server conducts search upon the personal data memorized therein by referring to the telephone number received, so as to compare the destination data of travel contained in the personal data being coincident with, to the location identification information received, thereby to transmit the travel data to said portable terminal when they are coincident with each other.

11. An information transmitting method, for transmitting travel information necessary for traveling, from a travel server memorizing personal data and various kinds of data therein, to a portable terminal having a function of transmission of data, comprising the following steps:
a step for producing the travel data necessary for travel from the personal data, including destination data of travel, and the various kinds of data, which are memorized in said travel server, in said travel server;
a step for transmitting a telephone number of said portable terminal itself together with a location information calculated out in a location detector portion for receiving radio wave from a positioning system, which is owned by said portable terminal, from said portable terminal; and
a step for conducting search upon the personal data memorized in said travel server, by referring to the telephone number received, so as to compare the destination data of travel contained in the personal data being coincident with, to the location identification information received, thereby transmitting the travel data to said portable terminal when they are coincident with each other.

12. A portable terminal for use in an information transmission system, having a portable terminal having transmission function of data; and a travel server for memorizing personal data and various kinds of data therein, thereby producing travel data necessary for traveling, from the personal data, including destination information of travel therein, and the various kinds of data, so as to transmit the travel data to said portable terminal depending upon location information of said portable terminal, wherein said portable terminal comprises:
means for memorizing a telephone number of said travel server; and
means for transmitting location identification information to be used in discriminating of a location registration area when said portable terminal conducts a location registration, together with a telephone number of said portable terminal itself, to said travel server.

13. A portable terminal for use in an information transmission system, having a portable terminal having transmission function of data; and a travel server for memorizing personal data and various kinds of data therein, thereby producing travel data necessary for traveling, from the personal data, including destination information of travel therein, and the various kinds of data, so as to transmit the travel data to said portable terminal depending upon location information of said portable terminal, wherein said portable terminal comprises:
a location detector portion for receiving radio wave from a positioning system; and
means for transmitting location information calculated out by said location detector portion, together with a telephone number of said portable terminal itself, to said travel server.

14. A server for use in an information transmission system, having a portable terminal having transmission function of data; and a travel server for memorizing personal data including destination information of travel, and various kinds of data therein, comprising:
means for producing travel data necessary for traveling from the personal data and the various kinds of data memorized in said travel server;
means for transmitting a telephone number of itself, periodically, with using a telephone number of said portable terminal memorized in said travel server in advance;
means for requiring location information of said portable terminal; and
means for transmitting the travel data to said portable terminal, depending upon the location information transmitted from said portable terminal.

15. A server for use in an information transmission system, having a portable terminal having transmission function of data; and a travel server for memorizing personal data including destination information of travel, and various kinds of data therein, comprising:
means for producing travel data necessary for traveling from the personal data and the various kinds of data memorized in said travel server;
means for receiving location information transmitted from said portable terminal having a location detector portion for receiving radio wave from a positioning system, together with a telephone number of said portable terminal; and
means for conducting search upon the personal data memorized therein, by referring to the telephone number received, so as to compare the destination data of travel contained in the personal data being coincident with, to the location identification information received, thereby transmitting the travel data to said portable terminal when they are coincident with each other.

16. An information transmission system, comprising:
a portable terminal having transmission function of data;
a in-house server for transmitting data through a network; and
a travel server for memorizing personal data including destination information of travel, and various kinds of data therein; wherein,
information of either one of picture and audio, being recorded during travel, is transmitted from said portable terminal to said travel server, together with either one or both of location information and time information recorded, and said travel server compiles the information transmitted from said portable terminal, thereby to transmit it to said in-house server as an album after the travel.

17. An information transmission system, as described in the claim 16, wherein said information of either one of picture and audio recorded during the travel includes information obtained by taking through said portable terminal during the travel and a portion of travel information transmitted from said travel server.

18. An information transmission system, as described in the claim 16, wherein said portable terminal comprises:
a holding mechanism for holding an IC card therein; and
an input/output means for reading and/or writing from and/or into said IC card, wherein the information of either one of picture and audio, being recorded into said IC card during the travel, is transmitted from said portable terminal to said travel server, together with either one or both of location information and time information recorded.

19. An information transmission system, comprising:
a portable terminal having function of taking picture, as well as, of transmission of data;
a in-house server for transmitting data through a network; and
a travel server for memorizing personal data including destination information of travel, and various kinds of data therein; wherein,
information of either one of picture and audio, being taken during travel, is transmitted from said portable terminal to said travel server, together with either one or both of location information and time information recorded, and said travel server compiles the information transmitted from said portable terminal, thereby to transmit it to said in-house server as an album after the travel.
